# EUROPÄISCHE PATENTSCHRIFT

(11) **EP 1 059 198 B1**
(45) Veröffentlichungstag und Bekanntmachung des Hinweises auf die Patenterteilung: **16.04.2003**
(21) Anmeldenummer: 00110319.1
(22) Anmeldetag: 13.05.2000
(51) Int. Cl.: B60N 3/10

(54) **Haltevorrichtung für einen Getränkebehälter**
Holder for beverage receptacle
Dispositif de support d'un réceptacle de boissons

(30) Priorität: 08.06.1999 DE 19926003
(43) Veröffentlichungstag der Anmeldung: 13.12.2000
(73) Patentinhaber: Fischerwerke Arthur Fischer GmbH & Co. KG, 72178 Waldachtal (DE)
(72) Erfinder: Bieck, Thorsten, 72178 Waldachtal (DE); Schaal, Falk, 72275 Alpirsbach (DE); Stoll, Hans-Peter, 72280 Dornstetten (DE); Bolländer, Jochen, 85049 Ingolstadt (DE); Breyer, Gunter, 85055 Etting (DE)

(56) Entgegenhaltungen:
- DE-A- 4 318 249
- DE-A- 19 825 795
- US-A- 5 379 978
- PATENT ABSTRACTS OF JAPAN vol. 015, no. 194 (M-1114), 20. Mai 1991 (1991-05-20) & JP 03 050039 A (DAIHATSU MOTOR CO LTD), 4. März 1991 (1991-03-04)

## Beschreibung

Die Erfindung betrifft eine Haltevorrichtung für einen Getränkebehälter wie beispielsweise eine Tasse, einen Becher oder eine Getränkedose, die zum Einbau in einem Kraftwagen vorgesehen ist. Die Haltevorrichtung weist eine Schiebeführung auf, in welcher ein Schlitten aus einer eingeschobenen in eine ausgezogene Stellung verschiebbar geführt ist. In der ausgezogenen Stellung ist ein Getränkebehälter auf den Schlitten stellbar.

Eine oberbegriffsmäßige Haltervorrichtung in aus der DE-A-198 25 795 bekannt.

Des Weiteren weist die Haltevorrichtung ein beispielsweise ringförmiges Halteelement auf, welches auf dem Schlitten angeordnet ist und welches eine Einstellöffnung zum Einstellen des Getränkebehälters aufweist. Das Halteelement ist mit einem Vierhebelgetriebe mit dem Schlitten verbunden, wobei ein Hebel des Vierhebelgetriebes vom Halteelement und ein gegenüberliegender Hebel des Vierhebelgetriebes vom Schlitten gebildet ist. Das Vierhebelgetriebe ermöglicht es, das Halteelement aus einer flach auf dem Schlitten aufliegenden, abgesenkten in eine vom Schlitten nach oben angehobene Stellung zu bewegen. In der abgesenkten Stellung des Halteelements sind der Schlitten und das Halteelement flach und lassen sich dadurch platzsparend in ein flaches Gehäuse schieben. In der angehobenen Stellung weist das Halteelement, in dessen Einstellöffnung der Getränkebehälter einstellbar ist, einen vertikalen Abstand vom Schlitten, auf den der Getränkebehälter stellbar ist, auf, so dass das Halteelement einen eingestellten Getränkebehälter in einer Höhe umschließt, die einen sicheren Stand des Getränkebehälters gewährleistet.

Das Anheben des Halteelements erfolgt mittels eines Aufstellfederelements, das am Vierhebelgetriebe angreift und das das Halteelement in die angehobene Stellung drückt.

Das Anheben des Halteelements erfolgt selbsttätig beim Verschieben des Schlittens in die ausgezogene Stellung. Um das Halteelement beim Verschieben in die eingeschobene Stellung auf den Schlitten abzusenken und dadurch den Schlitten zusammen mit dem Halteelement beispielsweise in ein flaches Gehäuse schieben zu können, weist die erfindungsgemäße Haltevorrichtung einen Steuerhebel auf, der schwenkbar am Schlitten angebracht ist und der an einem Hebel des Vierhebelgetriebes angreift. Der Steuerhebel wird beim Verschieben des Schlittens aus der ausgezogenen in die eingeschobene Stellung niedergedrückt und bewegt dadurch das Halteelement gegen die Kraft des Aufstellfederelements nach unten in die abgesenkte Stellung auf den Schlitten. Das Niederdrücken des Steuerhebels kann beispielsweise durch einen oberen Rand einer Öffnung erfolgen, durch die der Schlitten in beispielsweise ein Gehäuse eingeschoben wird. Auch kann beispielsweise eine Kulissenführung vorgesehen sein, welche den Steuerhebel beim Verschieben des Schlittens in die eingeschobene Stellung nach unten drückt.

Der Erfindung liegt die Aufgabe zugrunde, das Halteelement in der vom Schlitten angehobenen Stellung so zu sichern, dass es nicht versehentlich niedergedrückt werden kann.

Diese Aufgabe wird erfindungsgemäß durch die Merkmale des Anspruchs 1 gelöst. Um das Halteelement in der angehobenen Stellung zu sichern, ist das Vierhebelgetriebe und/oder der Steuerhebel der erfindungsgemäßen Haltevorrichtung als Gesperre ausgebildet, welches das Halteelement selbsttätig in der angehobenen Stellung gegen ein Niederdrücken sperrt. Es ist dadurch nicht möglich, das Halteelement aus der angehobenen Stellung auf den Schlitten niederzudrücken, sondern es muss zum Absenken des Halteelements der Schlitten in die eingeschobene Stellung verschoben werden, wodurch der Steuerhebel das Halteelement in die abgesenkte Stellung auf den Schlitten niederbewegt. Durch das Sperren des Halteelements in der angehobenen Stellung wird ein versehentliches Niederdrücken des Halteelements und ein damit verbundener unzureichender Halt eines eingestellten Getränkebehälters verhindert. Die erfindungsgemäße Ausbildung des Vierhebelgetriebes und/oder des Steuerhebels als Gesperre hat den Vorteil, dass die Sperrung des Halteelements in der angehobenen Stellung gegen Niederdrücken selbsttätig mit dem Verschieben des Schlittens in die ausgezogene Stellung erfolgt. Ein manuelles Verriegeln des Halteelements in der angehobenen Stellung erübrigt sich dadurch und das Sperren des Halteelements in der angehobenen Stellung gegen Niederdrücken kann nicht vergessen oder aus Bequemlichkeit unterlassen werden. Des Weiteren wird die Sperrung selbsttätig durch Verschieben des Schlittens in die eingeschobene Stellung aufgehoben, das Halteelement muss zum Absenken auf den Schlitten daher nicht entriegelt werden. Das Absenken des Halteelements auf den Schlitten erfolgt bei der erfindungsgemäßen Haltevorrichtung ausschließlich durch Verschieben des Schlittens in die eingeschobene Stellung und kann nicht durch Druck auf das Halteelement bewerkstelligt werden.

Bei einer Ausgestaltung der Erfindung weist die Haltevorrichtung eine Kulissenführung für den Steuerhebel auf, die den Steuerhebel beim Verschieben des Schlittens aus der ausgezogenen in die eingeschobene Stellung nach unten drückt. Die Kulissenführung ermöglicht auf einfache Weise, das Absenken des Halteelements auf den Schlitten aus der Verschiebebewegung des Schlittens in die eingeschobene Stellung abzuleiten.

In bevorzugter Ausgestaltung der Erfindung ist der Schlitten, auf den der Getränkebehälter in der ausgezogenen Stellung stellbar ist, als Tropfschale ausgebildet, um evtl. aus dem eingestellten Getränkebehälter herausschwappende Flüssigkeit aufzufangen.

Zur Ausbildung des Vierhebelgetriebes und/oder des Steuerhebels als Gesperre sieht eine Ausgestaltung der Erfindung vor, einen Hebel des Vierhebelgetriebes, welcher das Halteelement mit dem Schlitten verbindet, mit einer Kulissenbahn zu versehen. In der Kulissenbahn liegt ein Kulissenelement des Steuerhebels, beispielsweise ein seitlich vom Steuerhebel abstehender Kulissenzapfen, ein, der Steuerhebel ist verschiebbar in der Kulissenbahn eines Hebels des Vierhebelgetriebes geführt. Ein Endabschnitt der Kulissenbahn, in welchem sich das Kulissenelement des Steuerhebels bei angehobenem Halteelement befindet, verläuft in etwa radial zu einer Schwenkachse des Hebels. Durch diesen Verlauf der Kulissenbahn ist es in der angehobenen Stellung des Halteelements nicht möglich, den Hebel durch eine an ihm angreifende Kraft oder ein Moment, also beispielsweise durch Niederdrücken des Halteelements, zu verschwenken, da das Kulissenelement des Steuerhebels, welches sich in der angehobenen Stellung des Halteelements in dem radial zur Schwenkachse des Hebels verlaufenden End-abschnitt der Kulissenbahn befindet, eine solche Schwenkbewegung des Hebels verhindert. Um den Hebel zu schwenken, muss der Steuerhebel verschwenkt werden, der den Hebel des Vierhebelgetriebes niederdrückt.

Bei einer Weiterbildung der Erfindung weist die Haltevorrichtung ein Aufstellfederelement auf, welches an einem dem Steuerhebel fernen Hebel des Vierhebelgetriebes angreift und diesen in eine aufgestellte Position nach oben drückt. Dieses Aufstellfederelement bewirkt das Anheben des Halteelements vom Schlitten beim Verschieben des Schlittens in die ausgezogene Stellung an einem dem Steuerhebel fernen Ende des Halteelements.

In bevorzugter Ausgestaltung weist die Haltevorrichtung ein Öffnungfederelement auf, welches den Schlitten aus der eingeschobenen in die ausgezogene Stellung verschiebt. Dies hat den Vorteil, dass die Verschiebung des Schlittens in die ausgezogene Stellung selbsttätig erfolgt. Da auch das Anheben des Halteelements durch die Aufstellfederelemente erfolgt, läuft das Verschieben des Schlittens in die ausgezogene Stellung sowie das Anheben des Halteelements bequem selbsttätig ab. Zum Verschieben des Schlittens in die eingeschobene Stellung wird der Schlitten gegen die Kraft des Öffnungsfederelements verschoben, wobei aus der Verschiebung des Schlittens die Absenkbewegung des Halteelements auf den Schlitten abgeleitet wird. In der eingeschobenen Stellung wird der Schlitten durch eine entriegelbare Verriegelungseinrichtung gehalten.

Die Erfindung wird nachfolgend anhand eines in der Zeichnung dargestellten Ausführungsbeispiels näher erläutert. Es zeigen:
- Figur 1: eine erfindungsgemäße Haltevorrichtung in perspektivischer Darstellung schräg von vorn oben;
- Figur 2: die Haltevorrichtung aus Figur 1 in perspektivischer Darstellung schräg von hinten oben; und
- Figuren 3 bis 5: einen Schnitt entlang einer Mittellängsebene der Haltevorrichtung aus Figur 1 in verschiedenen Stellungen.

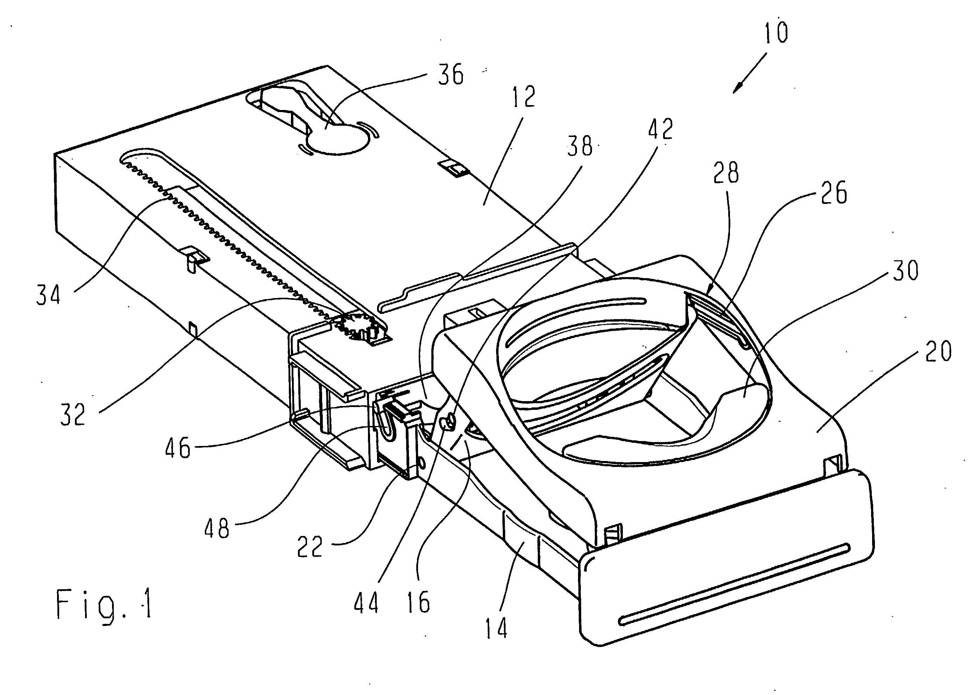

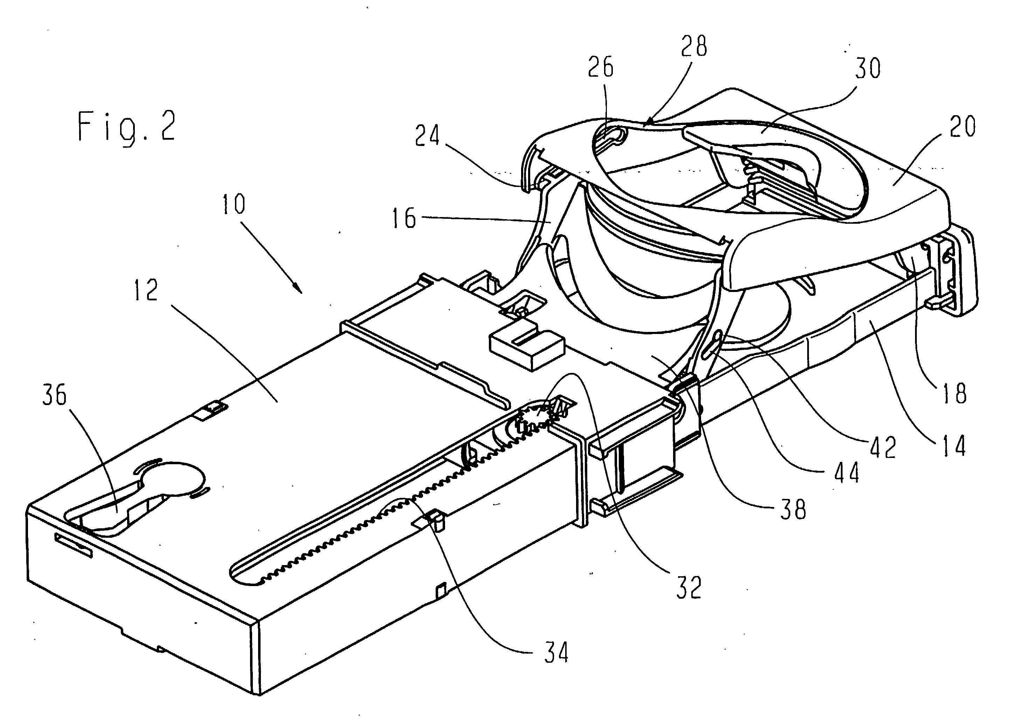

Die in Figuren 1 und 2 gezeigte, erfindungsgemäße, insgesamt mit 10 bezeichnete Haltevorrichtung für einen nicht dargestellten Getränkebehälter wie beispielsweise eine Getränkedose, eine Tasse oder einen Becher, ist zum Einbau in ein Armaturenbrett eines nicht dargestellten Kraftwagens vorgesehen. Die Haltevorrichtung 10 weist ein schachtelförmiges, flaches Gehäuse 12 mit einer Öffnung an einer vorderen Stirnseite auf. Im Gehäuse 12 ist mit einer Schiebeführung ein Schieber 14 schubladenartig aus einer eingeschobenen in die in Figuren 1 und 2 dargestellte ausgezogene Stellung verschiebbar geführt. Der Schlitten 14 ist als Tropfschale ausgebildet.

Am Schieber 14 ist mittels zweier Vierhebelgetriebe 14, 16, 18, 20 ein Halteelement 20 beweglich angebracht. Die beiden Vierhebelgetriebe 14, 16, 18, 20 sind deckungsgleich an beiden Seiten des Schlittens 14 angebracht. Der Schlitten 14 und das Halteelement 20 sind Teil der Vierhebelgetriebe 14, 16, 18, 20. Sie bilden zwei einander gegenüber angeordnete Hebel 14, 20 des Vierhebelgetriebes 14, 16, 18, 20. Zwei weitere Hebel 16, 18 des Vierhebelgetriebes 14, 16, 18, 20 verbinden das Halteelement 20 an seiner Rück- und an seiner Vorderseite beweglich mit dem Schlitten 14. Das Halteelement 20 ist ein in der Draufsicht näherungsweise quadratischer Ring mit einer kreisförmigen Einstellöffnung zum Einstellen eines Getränkebehälters. Ein hinterer Hebel 16 des Vierhebelgetriebes 14, 16, 18, 20 ist mit Schwenkzapfen 22 schwenkbar mit dem Schlitten 14 verbunden. An seinem anderen Ende weist der hintere Hebel 16 seitlich abstehende Kulissenzapfen 24 auf, die in Kulissenbahnen 26 des Halteelements 20 eingreifen und dort verschiebbar geführt sind. Die Kulissenbahnen 26 sind über den größten Teil ihrer Länge gerade und am Ende schräg abgewinkelt.

Ein vorderer Hebel 18 des Vierhebelgetriebes 14, 16, 18 ist mit seinen beiden Enden schwenkbar mit dem Schlitten 14 und mit dem Halteelement 20 verbunden. Mit dem vorderen und dem hinteren Hebel 18, 16 ist das Halteelement 20 aus einer auf den Schlitten 14 abgesenkten in die vom Schlitten angehobene, in Figuren 1 und 2 dargestellte Stellung beweglich geführt am Schlitten 14 angebracht. Das Anheben des Halteelements 20 erfolgt federbetätigt mittels zweier in der Zeichnung nicht sichtbarer, an sich bekannter Aufstellfederelemente. Diese Aufstellfederelemente sind als Torsionsschraubenfedern ausgebildet und auf den Schwenkachsen des vorderen und des hinteren Hebels 18, 16 angeordnet. Die Aufstellfederelemente stützen sich am Schlitten 14 ab und drücken die Hebel 16, 18 nach oben.

In der Einstellöffnung 28 des Halteelements 20 ist eine an sich bekannte, federbeaufschlagte Ausgleichsklappe 30 schwenkbar angeordnet, die an einem eingestellten Getränkebehälter anliegt und dadurch die Größe der Einstellöffnung 28 an den Getränkebehälter anpasst. In der in Figuren 1 und 2 dargestellten, ausgezogenen Stellung des Schlittens 14 und angehobenen Stellung des Halteelements 20 ist ein nicht dargestellter Getränkebehälter in die Einstellöffnung 28 des Halteelements 20 einstellbar und auf den als Tropfschale ausgebildeten Schieber 14 aufstellbar. Durch den vertikalen Abstand des Halteelements 20 vom Schlitten 14 ist ein Halt des eingestellten Getränkebehälters in ausreichender Höhe gewährleistet, um ein Umkippen des Getränkebehälters zu verhindern.

Das Verschieben des Schlittens 14 in die ausgezogene Stellung erfolgt federbetätigt mittels eines in der Zeichnung nicht sichtbaren Öffnungsfederelements. Das Öffnungsfederelement ist als an sich bekannte Rollfeder ausgebildet. Die Rollfeder ist eine sich selbst zu einem Wickel aufrollende Bandfeder, also eine Zugfeder. Der Wickel der Rollfeder ist drehbar an einer Rückseite des Schlittens 14 angebracht, ein abgewickeltes Ende ist vorn an einem Boden des Gehäuses 12 befestigt, so dass die Zugkraft der Rollfeder den Schlitten 14 in die ausgezogene Stellung verschiebt.

Die Verschiebung des Schlittens 14 wird von einem an sich bekannten Hydrodämpfungselement 32 gedämpft, das in einem rückwärtigen Bereich oben in den Schlitten 14 eingesetzt ist und dessen Zahnrad mit einer mit dem Gehäuse 12 einstückigen Zahnstange 34 kämmt.

Um den Schlitten 14 in der eingeschobenen Stellung im Gehäuse 12 zu halten ist eine an sich bekannte Push-Push- oder Herzkurven-Verriegelungseinrichtung vorgesehen, die einen schwenkbar im rückwärtigen Bereich in der Oberseite des Gehäuses 12 angeordneten Riegel 36 aufweist, der den Schlitten 14 in der in das Gehäuse 12 eingeschobenen Stellung verriegelt. Durch einen kurzen Druck von vorn gegen den Schlitten 14 wird die Verriegelungseinrichtung entriegelt und der Schlitten 14 wird federbetätigt in die ausgezogene Stellung verschoben. Beim Verschieben des Schlittens 14 in die ausgezogene Stellung drücken die an den Hebeln 16, 18 angreifenden, in der Zeichnung nicht sichtbaren Aufstellfederelemente das Halteelement 20 in die angehobene Stellung nach oben.

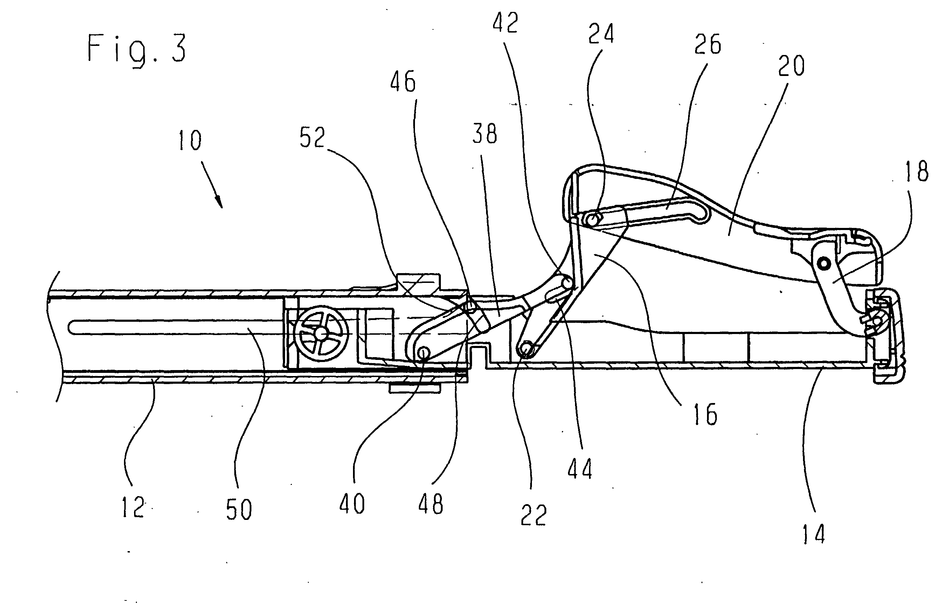

Um das Halteelement 20 beim Einschieben des Schlittens 14 in das Gehäuse 12 auf den Schlitten 14 abzusenken, weist die erfindungsgemäße Haltevorrichtung 10 einen Steuerhebel 38 auf. Der Steuerhebel 38 ist plattenförmig ausgebildet und erstreckt sich über die Breite des Schlittens 14. Der Steuerhebel 38 ist hinter dem hinteren Hebel 16 des Vierhebelgetriebes 14, 16, 18, 20 angeordnet. Mit seitlich abstehenden Schwenkzapfen 40 ist der Steuerhebel 38 schwenkbar mit dem Schlitten 14 verbunden (vgl. Figur 3). An einem den Schwenkzapfen 40 fernen Ende weist der Steuerhebel 38 zwei seitlich abstehende Kulissenzapfen 42 auf, die verschiebbar in Kulissenbahnen 44 in den beiden hinteren Hebeln 16 geführt sind. Die Kulissenbahnen 44 sind in den beiden hinteren Hebeln 16 der beiden deckungsgleichen, auf beiden Seiten des Schlittens 14 angeordneten Vierhebelgetrieben 14, 16, 18, 20 angebracht. Die Kulissenbahnen 44 verlaufen schräg in den hinteren Hebel 16. Ein Endabschnitt der Kulissenbahnen 44 ist abgewinkelt und verläuft radial zu den Schwenkzapfen 22, um die die Schwenkhebel 16 am Schlitten 14 schwenkbar sind. In diesen radialen Endabschnitten der Kulissenbahnen 44 befinden sich die Kulissenzapfen 42 des Steuerhebels 38, wenn sich das Halteelement 20 in der angehobenen Stellung befindet. Durch den radialen Verlauf der Endabschnitte der Kulissenbahnen 44 bildet der Steuerhebel 38 mit den hinteren Hebeln 16 der Vierhebelgetriebe 14, 16, 18, 20 ein Gesperre, welches ein Verschwenken der nach oben geschwenkten hinteren Hebel 16 nur durch Verschwenken des Steuerhebels 38, nicht aber durch eine auf die hinteren Hebel 16 ausgeübte Kraft oder Moment zulässt. Werden die hinteren Hebel 16 mit einer Kraft in einer Schwenkrichtung um die Schwenkzapfen 22 beaufschlagt, sperren die Kulissenzapfen 42 des Steuerhebels 38, welche sich in dem radialen Endabschnitt der Kulissenbahnen 44 befinden, die hinteren Hebel 16 gegen Schwenken. Eine die hinteren Hebel 16 in Schwenkrichtung beaufschlagende Kraft könnte durch Niederdrücken des sich in der angehobenen Stellung befindenden Halteelements 20 ausgeübt werden. Durch die Ausbildung des Steuerhebels und der hinteren Hebel 16 des Vierhebelgetriebes 14, 16, 18, 20 als Gesperre kann das Halteelement 20 nicht durch Druck von oben auf den Schlitten 14 herabgedrückt werden, sondern es muss durch Niederschwenken des Steuerhebels 38 abgesenkt werden. Ein versehentliches Niederdrücken des Halteelements 20 wird dadurch verhindert.

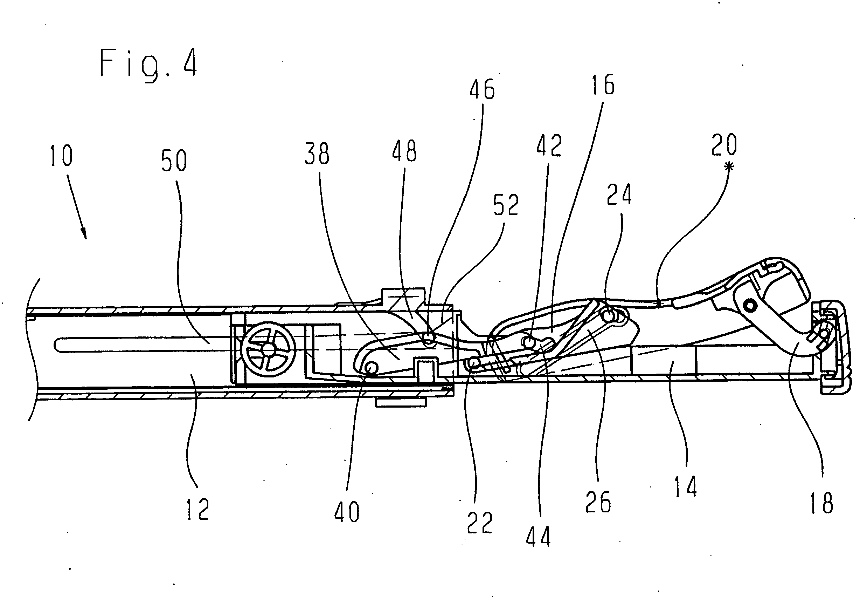

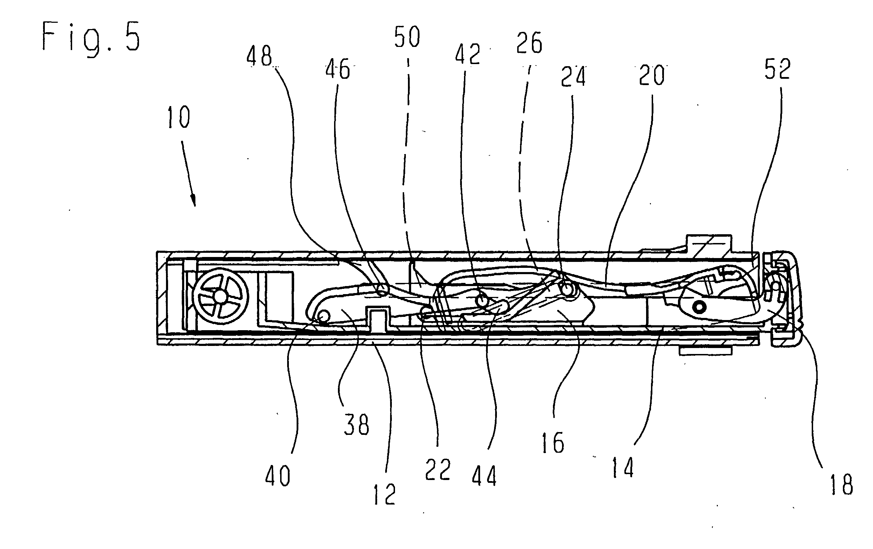

Das Absenken des Halteelements 20 aus der angehobenen Stellung wird anhand der Figuren 3 bis 5 beschrieben. Figur 3 zeigt den Schlitten 14 in der ausgezogenen und das Halteelement 20 in der angehobenen Stellung, Figur 5 zeigt das Halteelement 20 in der auf den Schlitten 14 abgesenkten und den Schlitten 14 in der in das Gehäuse 12 eingeschobenen Stellung, Figur 4 zeigt eine Zwischenstellung. Der Steuerhebel 38 weist zwei seitlich abstehende Kulissenzapfen 46 in seinem mittleren Bereich auf. Diese durchgreifen kreisbogenförmige Schlitze 48 in Seitenwänden des Schlittens 14 und sind verschiebbar in Kulissenbahnen 50 an Innenseiten von Seitenwänden des Gehäuses 12 geführt. Die Kulissenbahnen 50 verlaufen gerade und parallel zur Verschieberichtung des Schlittens 14 und laufen mit einer nach oben gerichteten Schrägfläche 52 offen an der Öffnung des Gehäuses 12 aus. Die kreisbogenförmigen Schlitze 48 in den Seitenwänden des Schlittens 14 haben lediglich den Zweck, den Eingriff der Kulissenzapfen 46 des Steuerhebels 38 in den Kulissenbahnen 50 in den Seitenwänden des Gehäuses 12 zu ermöglichen. Eine sonstige Funktion haben die kreisbogenförmigen Schlitze 48 nicht.

Wird der Schlitteri 14 aus der ausgezogenen Stellung in das Gehäuse 12 hinein verschoben, gleiten die Kulissenzapfen 46 im mittleren Bereich der Steuerhebel 38 an den Schrägflächen 52 entlang. Dadurch wird der Steuerhebel 38 nach unten in die in Figur 4 dargestellte Stellung gedrückt. Der Steuerhebel 38, der mit seinen anderen Kulissenzapfen 42 in die Kulissenbahnen 44 in den hinteren Hebeln 16 eingreift, drückt die hinteren Hebel 16 gegen das nicht sichtbare, an den hinteren Hebeln 16 angreifende Öffnungsfederelement nach unten. Der Steuerhebel 38 schwenkt also beim Einschieben des Schlittens 14 in das Gehäuse 12 die hinteren Hebel 16 nach unten und bewegt dadurch die Rückseite des Halteelements 20 nach unten in die in Figur 4 dargestellte Stellung.

Die Kulissenzapfen 24 der hinteren Hebel 16 gleiten beim Absenken des rückwärtigen Endes des Halteelements 20 in dessen Kulissenbahnen 26 nach vom. Sobald das Halteelement 20 mit einer hinteren, unteren Kante auf dem Schlitten 14 oder auch auf den hinteren Hebeln 16 aufsitzt, drücken die hinteren Hebel 16, die vom Steuerhebel 38 weiter nach unten gedrückt werden, auch das vordere Ende des Halteelements 20 nach unten auf den Schlitten 14. Das Halteelement 20 liegt flach auf dem Schlitten 14 auf und wird mit diesem zusammen in das Gehäuse 12 eingeschoben, wie in Figur 5 dargestellt.

Das Gehäuse 12, der als Tropfschale ausgebildete Schlitten 14, das Halteelement 20, die Hebel 16, 18 und der Steuerhebel 38 sind als Spritzgießteile aus Kunststoff hergestellt.

## Patentansprüche

1. Haltevorrichtung für einen Getränkebehälter, mit einem Schlitten (14), der mit einer Schiebeführung schubladenartig aus einer eingeschobenen in eine ausgezogene Stellung verschiebbar geführt ist, wobei in der ausgezogenen Stellung ein Getränkebehälter auf den Schlitten (14) stellbar ist, mit einem Halteelement (20), welches auf dem Schlitten (14) angeordnet ist und welches eine Einstellöffnung (28) zum Einstellen des Getränkebehälters aufweist, wobei das Halteelement (20) und der Schlitten (14) über ein Vierhebelgetriebe (14, 16, 18, 20) miteinander verbunden sind, wobei der Schlitten (14) einen und das Halteelement (20) einen gegenüberliegenden Hebel (14, 20) des Vierhebelgetriebes (14, 16, 18, 20) bilden, und wobei das Vierhebelgetriebe (14, 16, 18, 20) das Halteelement (20) aus einer abgesenkten in eine angehobene Stellung beweglich am Schlitten (14) führt, **gekennzeichnet durch** einen Steuerhebel (38), der schwenkbar am Schlitten (14) angebracht ist und der an einem Hebel (16) des Vierhebelgetriebes (14, 16, 18, 20) angreift, wobei der Steuerhebel (38) beim Verschieben des Schlittens (14) aus der ausgezogenen in die eingeschobene Stellung niedergedrückt wird und dabei das Halteelement (20) aus der angehobenen in die abgesenkte Stellung bewegt, und wobei das Vierhebelgetriebe (14, 16, 18, 20) und/oder der Steuerhebel (38) ein Gesperre bilden, das ein Niederdrücken des Halteelements (20) in der angehobenen Stellung verhindert.

2. Haltevorrichtung nach Anspruch 1, **dadurch gekennzeichnet, dass** die Haltevorrichtung (10) ein Aufstellfederelement aufweist, das am Vierhebelgetriebe (14, 16, 18, 20) angreift und das das Halteelement (20) in die angehobene Stellung drückt.

3. Haltevorrichtung nach Anspruch 1, **dadurch gekennzeichnet, dass** die Haltevorrichtung (10) eine Kulissenführung (46, 50, 52) für den Steuerhebel (38) aufweist, die den Steuerhebel (38) beim Verschieben des Schlittens (14) aus der ausgezogenen in die eingeschobene Stellung nach unten drückt.

4. Haltevorrichtung nach Anspruch 1, **dadurch gekennzeichnet, dass** der Schlitten (14) eine Tropfschale (14) aufweist.

5. Haltevorrichtung nach Anspruch 1, **dadurch gekennzeichnet, dass** ein das Halteelement (20) mit dem Schlitten (14) verbindender Hebel (16) des Vierhebelgetriebes (14, 16, 18, 20) eine Kulissenbahn (44) aufweist, in der ein Kulissenelement (42) des Steuerhebels (38) verschiebbar geführt ist, und dass zur Ausbildung des Vierhebelgetriebes (14, 16, 18, 20) und/oder des Steuerhebels (38) als Gesperre ein Endabschnitt der Kulissenbahn (44), in welchem sich das Kulissenelement (42) bei angehobenem Halteelement (20) befindet, in etwa radial zu einer Schwenkachse (40) des Hebels (16) verläuft.

6. Haltevorrichtung nach Anspruch 1, **dadurch gekennzeichnet, dass** die Haltevorrichtung (10) ein Aufstellfederelement aufweist, welches einen dem Steuerhebel (38) fernen, das Halteelement (20) mit dem Schlitten (14) verbindenden Hebel (18) des Vierhebelgetriebes (14, 16, 18, 20) in eine aufgestellte Position nach oben drückt.

7. Haltevorrichtung nach Anspruch 1, **dadurch gekennzeichnet, dass** die Haltevorrichtung (10) ein Öffnungsfederelement, welches den Schlitten (14) aus der eingeschobenen in die ausgezogenen Stellung bewegt, und eine entriegelbare Verriegelungseinrichtung (36), die den Schlitten (14) gegen die Kraft des Öffnungsfederelements in der eingeschobenen Stellung hält, aufweist.

## Claims

1. Holding device for a drinks container, having a carriage (14) which is displaceably guided by a sliding guide element, in the manner of a drawer, from an inserted position to a pulled-out position, it being possible for a drinks container to be placed on the carriage (14) in the pulled-out position, and having a holding element (20) which is arranged on the carriage (14) and has an insertion opening (28) for the insertion of the drinks container, the holding element (20) and the carriage (14) being connected to one another by a four-lever mechanism (14, 16, 18, 20), the carriage (14) forming one lever (14, 20) of the four-lever mechanism (14, 16, 18, 20) and the holding element (20) forming an opposite lever thereof, and the four-lever mechanism (14, 16, 18, 20) movably guiding the holding element (20) on the carriage (14) from a lowered position to a raised position, **characterized by** a control lever (38) which is mounted pivotally on the carriage (14) and engages one lever (16) of the four-lever mechanism (14, 16, 18, 20), the control lever (38) being pressed down upon displacement of the carriage (14) from the pulled-out position to the inserted position, thus moving the holding element (20) from the raised position to the lowered position, and the four-lever mechanism (14, 16, 18, 20) and/or the control lever (38) forming a safety catch that prevents the holding element (20) in the raised position from being pressed downwards.

2. Holding device according to claim 1, **characterized in that** the holding device (10) has an erecting spring element that engages the four-lever mechanism (14, 16, 18, 20) and urges the holding element (20) into the raised position.

3. Holding device according to claim 1, **characterized in that** the holding device (10) has a guide track arrangement (46, 50, 52) for the control lever (38), which guide track arrangement presses the control lever (38) downwards upon displacement of the carriage (14) from the pulled-out position to the inserted position.

4. Holding device according to claim 1, **characterized in that** the carriage (14) has a drip tray (14).

5. Holding device according to claim 1, **characterized in that** one lever (16) of the four-lever mechanism (14, 16, 18, 20) connecting the holding element (20) to the carriage (14) has a guideway (44) in which a guide element (42) of the control lever (38) is displaceably guided, and, to make the four-lever mechanism (14, 16, 18, 20) and/or the control lever (38) in the form of a safety catch, an end portion of the guideway (44) in which the guide element (42) is located when the holding element (20) is raised, extends approximately radially to a pivot axis (40) of the lever (16).

6. Holding device according to claim 1, **characterized in that** the holding device (10) has an erecting spring element that urges a lever (18) of the four-lever mechanism (14, 16, 18, 20) that is remote from the control lever (38) and connects the holding element (20) to the carriage (14) upwards into an upright position.

7. Holding device according to claim 1, **characterized in that** the holding device (10) has an opening spring element that moves the carriage (14) from the inserted position to the pulled-out position, and a releasable locking device (36) which holds the carriage (14) in the inserted position against the force of the opening spring element.

## Revendications

1. Support pour un récipient pour boisson, avec un chariot (14) qui, grâce à un guide coulissant, est amené par mouvement de tiroir de la position fermée vers la position ouverte, moyennant quoi on peut poser un récipient pour boisson sur le chariot (14) en position ouverte, avec un élément de maintien (20) disposé sur le chariot (14) et qui présente une ouverture réglable (28) pour la mise en place du récipient pour boisson, l'élément de maintien (20) et le chariot (14) étant reliés l'un à l'autre par un mécanisme à quatre leviers (14, 16, 18, 20), le chariot (14) formant un levier du mécanisme à quatre leviers (14, 16, 18, 20) et l'élément de maintien (20) formant un levier lui faisant face, et le mécanisme à quatre leviers (14, 16, 18, 20) mobile sur le chariot (14) faisant passer l'élément de maintien (20) d'une position abaissée vers une position relevée, **caractérisé en ce qu'**un levier de commande (38) qui peut basculer fixé sur le chariot (14) agit sur le levier (16) du mécanisme à quatre leviers (14, 16, 18, 20), moyennant quoi le levier de commande (38) est abaissé lors du passage du chariot (14) de la position ouverte vers la position fermée et ce faisant, fait passer l'élément de maintien (20) de la position relevée vers la position abaissée, et le mécanisme à quatre leviers (14, 16, 18, 20) et/ou le levier de commande (38) forment un dispositif de blocage qui empêche l'élément de maintien (20) dans sa position relevée d'être abaissé.

2. Support selon la revendication 1, **caractérisé en ce que** le support (10) présente un élément de rehaussement à ressort qui agit sur le mécanisme à quatre leviers (14, 16, 18, 20) et pousse l'élément de maintien (20) vers la position relevée.

3. Support selon la revendication 1, **caractérisé en ce que** le support (10) présente une coulisse de guidage (46, 50, 52) pour le levier de commande (38), qui pousse vers le bas le levier de commande (38) lors du déplacement du chariot (14) de la position ouverte vers la position fermée.

4. Support selon la revendication 1, **caractérisé en ce que** le chariot (14) présente un attrape-goutte (14).

5. Support selon la revendication 1, **caractérisé en ce qu'**un levier (16) du mécanisme à quatre leviers (14, 16, 18, 20) qui relie l'élément de maintien (20) avec le chariot (14) présente une rainure de coulisse (44) dans laquelle un élément coulissant (42) du levier de commande (38) se déplace, et **en ce que** pour former à partir du mécanisme à quatre leviers (14, 16, 18, 20) et/ou du levier de commande (38) un dispositif de blocage, une extrémité de la rainure de coulisse (44) dans laquelle se trouve l'élément coulissant (42) quand l'élément de maintien (20) est relevé, s'étend presque radialement par rapport à un axe de pivotement (40) du levier (16).

6. Support selon la revendication 1, **caractérisé en ce que** le support (10) présente un élément de rehaussement à ressort qui pousse vers le haut en une position relevée le levier (18) du mécanisme à quatre leviers (14, 16, 18, 20), levier éloigné du levier de commande (38) qui relie l'élément de maintien (20) au chariot (14).

7. Support selon la revendication 1, **caractérisé en ce que** le support (10) présente un élément d'ouverture à ressort, qui fait passer le chariot (14) de la position fermée vers la position ouverte, et un dispositif de blocage (36) pouvant être débloquer qui maintient le chariot (14) en position fermée contre la force de l'ouverture à ressort.
